# EUROPÄISCHE PATENTSCHRIFT

(11) **EP 3 696 455 B1**
(45) Veröffentlichungstag und Bekanntmachung des Hinweises auf die Patenterteilung: **25.01.2023**
(21) Anmeldenummer: 20155989.5
(22) Anmeldetag: 06.02.2020
(51) Int. Cl.: F16K 31/06, F16K 39/02

(54) **ELEKTROMAGNETISCH BETÄTIGTES VENTIL**
ELECTROMAGNETICALLY ACTUATED VALVE
SOUPAPE À COMMANDE ÉLECTROMAGNÉTIQUE

(30) Priorität: 12.02.2019 DE 102019103447
(43) Veröffentlichungstag der Anmeldung: 19.08.2020
(73) Patentinhaber: SVM Schultz Verwaltungs-GmbH & Co. KG, 87700 Memmingen (DE)
(72) Erfinder: Wassermann, Ralph, 87752 Holzgünz (DE); Weiß, Johann, 88239 Wangen (DE)
(74) Vertreter: Patentanwälte Olbricht, Buchhold, Keulertz Partnerschaft mbB

(56) Entgegenhaltungen:
- WO-A1-2016/180737
- DE-A1- 2 540 599
- DE-A1- 19 708 425
- DE-A1- 19 757 475
- DE-U1- 9 315 336
- US-A1- 2011 068 286

## Beschreibung

Die Erfindung betrifft ein Ventil. Ventile werden typischerweise eingesetzt, um einen Strom von Fluiden wie Gasen oder Flüssigkeiten zu schalten. Hierzu dient typischerweise ein Dichtmittel, welches gegen einen Ventilsitz gepresst wird. DE9315336U und WO2016180737 offenbaren bekannte Ventile.

Es hat sich gezeigt, dass gerade beim Schalten von Gasen, welche in typischen Verwendungssituationen sehr kalt sind, Probleme bezüglich der Dichtigkeit von Ventilen auftreten. Beispielsweise sei hier Wasserstoff erwähnt, welcher typischerweise in flüssiger bzw. tiefkalter Form gelagert wird und dann kontrolliert an einen Verbraucher abgegeben wird.

Es ist eine Aufgabe der Erfindung, ein Ventil bereitzustellen, welches im Vergleich zum Stand der Technik alternativ ausgeführt ist, beispielsweise eine bessere Dichtigkeit beim Schalten von tiefkalten Substanzen zeigt.

Dies wird erfindungsgemäß durch ein Ventil gemäß Anspruch 1 erreicht Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein elektromagnetisch betätigtes Ventil. Das Ventil weist einen Ventilkörper auf, in welchem ein Einlass und ein Auslass ausgebildet sind. Durch den Einlass kann ein zu schaltendes Fluid einströmen, wobei es typischerweise nur bei geöffnetem Ventil durch den Auslass wieder ausströmen kann.

Das Ventil weist einen Ventilsitz auf, welcher eine Hauptdüse umschließt und in dem Ventilkörper strömungsmäßig zwischen dem Einlass und dem Auslass angeordnet ist. Die Hauptdüse ist dabei typischerweise eine Öffnung oder ein Abschnitt innerhalb des Ventilkörpers, durch welchen eben nur bei geöffnetem Ventil Fluid fließen soll.

Das Ventil weist einen Anker auf, welcher in dem Ventilkörper zur Bewegung lediglich linear entlang einer Raumrichtung angeordnet ist. Dies bedeutet typischerweise, dass sich der Anker nur linear entlang einer Achse zwischen zwei vorgegebenen Endpositionen bewegen kann. Eine Raumrichtung kann dabei einer Kombination aus einer Richtung und einer dazu exakt entgegengesetzten Richtung entsprechen. Anders ausgedrückt kann der Anker eindimensional entlang ei-ner im Ventilkörper definierten Achse bewegt werden. Eine Bewegung quer zu dieser Raumrichtung ist dabei nicht vorgesehen, was das Vorhandensein eines gewissen technisch bedingten Spiels nicht ausschließt.

Das Ventil weist eine Spule auf, welche bei durchfließendem Strom ein Magnetfeld zur Bewegung des Ankers entlang der Raumrichtung erzeugt. Dadurch kann der Anker aktiv bewegt werden, wobei typischerweise durch ein Umpolen Kräfte in beiden möglichen Richtungen erzeugt werden können.

Das Ventil weist eine Vorspanneinrichtung auf. Das Ventil weist ferner einen Dichtnippel auf, in welchem eine Vorsteuerbohrung angeordnet ist.

Das Ventil weist eine Nippelführung auf, in welcher der Dichtnippel aufgenommen ist und welche in dem Ventilkörper zur Bewegung lediglich linear entlang der Raumrichtung zwischen einer schließstellung und einer Öffnungsstellung angeordnet ist, wobei Nippelführung und Anker relativ zueinander begrenzt beweglich sind. Die Nippelführung ist somit ebenfalls entlang der gleichen Raumrichtung wie der Anker bewegbar. Auch bei der Nippelführung ist eine Bewegung quer zur Raumrichtung nicht vorgesehen. Auch hier ist ein gewisses Spiel dadurch nicht ausgeschlossen. Bevorzugt wird jedoch gerade bei der Nippelführung eine möglichst genau lineare Bewegung realisiert.

In der Schließstellung verschließt der Dichtnippel die Hauptdüse derart, dass nur die Vorsteuerbohrung Einlass und Auslass verbindet. In der Offnungsstellung ist der Dichtnippel vom Ventilsitz beabstandet. Dadurch nimmt der Dichtnippel in der Schließstellung eine Position ein, in welcher er die Hauptdüse im Wesentlichen verschließt, wobei - wenn überhaupt - lediglich durch die Vorsteu-erbohrung ein Fluid zwischen Einlass und Auslass strömen kann bzw. ein Druckausgleich stattfinden kann. In der Öffnungsstellung ist dagegen das Ventil typischerweise geöffnet, so dass ein im Rahmen der Möglichkeiten freier Druckausgleich zwischen Einlass und Auslass sowie ein entsprechender Fluidstrom stattfinden können.

Die Vorspanneinrichtung übt eine Kraft auf den Anker aus, welche ihn in eine Ruheposition vorspannt. In der Ruheposition überträgt der Anker die Kraft auf den Dichtnippel, wobei die Kraft den Dichtnippel in die Schließstellung drückt und der Anker die Vorsteuerbohrung verschließt. Die Ruheposition entspricht dabei somit derjenigen Position, welche der Anker einnimmt, wenn kein durch die Spule erzeugtes Magnetfeld eine Kraft auf ihn ausübt. Die Vorspanneinrichtung sorgt dafür, dass in diesem Fall der Anker die Ruheposition einnimmt. In der Ruheposition überträgt der Anker die von der Vorspanneinrichtung vermittelte Kraft weiter auf den Dichtnippel und drückt den Dichtnippel dabei typischerweise gegen den Ventilsitz, so dass die Hauptdüse wirkungsvoll abgedichtet wird. Wie bereits weiter oben erwähnt, verbleibt in diesem Fall die Vorsteuerbohrung als Durchgang durch den Dichtnippel. Wenn der Anker seine Ruheposition einnimmt, verschließt er nunmehr jedoch auch diese Vorsteuerbohrung, so dass letztlich kein Fluidstrom und kein Druckausgleich zwischen Einlass und Auslass mehr möglich sind, da dies durch den Dichtnippel und den Anker verhindert wird.

Der Anker weist ein Mitnahmeelement auf, welches bei Bewegung des Ankers aus der Ruheposition in eine Zwischenposition nach Öffnung der Vorsteuerbohrung mit der Nippelführung in Eingriff kommt. In der Zwischenposition des Ankers ist somit die Vorsteuerbohrung geöffnet, was einen Druckausgleich zwischen Einlass und Auslass, jedoch noch keinen signifikanten Volumenstrom ermöglicht. Der Druckausgleich erleichtert jedoch das anschließende Entfernen des Dichtnippels vom Ventilsitz.

Bei weiterer Bewegung des Ankers aus der Zwischenposition zieht das Mitnahmeelement die Nippelführung aus der Schließstellung in die Öffnungsstellung. Dabei handelt es sich typischerweise um eine Bewegung, welche den Anker noch weiter weg von dem Ventilsitz bringt als in der Zwischenstellung. Dadurch kann der Anker die Nippelführung aktiv bewegen und dadurch den Dichtnippel aktiv von dem Ventilsitz entfernen, was einer Öffnung des Ventils gleichkommt.

Durch den bereits vorher möglichen Druckausgleich durch das Öffnen der Vorsteuerbohrung wird diese Öffnung deutlich erleichtert, da erheblich geringere Druckdifferenzen zu überwinden sind.

Durch das erfindungsgemäße Ventil wird erreicht, dass der Dichtnippel in der Nippelführung exakt gehalten und bei seinem Kontakt mit dem Ventilsitz entsprechend positioniert werden kann.

Dadurch wird verhindert, dass der Dichtnippel aufgrund eines eventuellen Spiels von Komponenten bei aufeinanderfolgenden Schließvorgängen an unterschiedlichen Stellen mit dem Ventilsitz in Kontakt kommt. Dies ist insbesondere deshalb vorteilhaft, weil ein solcher Dichtnippel insbesondere bei tiefen Temperaturen zum Verglasen neigen kann, was dazu führen kann, dass ein eventueller Abdruck des Ventilsitzes in dem Dichtnippel auch dann verbleibt, wenn er sich vom Ventilsitz entfernt befindet. Bei dem erfindungsgemäßen Ventil kann sichergestellt werden, dass der Dichtnippel nicht mehr an unterschiedlichen Stellen mit dem Ventilsitz in Kontakt kommt, wodurch unerwünschte Leckagen vermieden werden.

Die Vorsteuerbohrung ist bevorzugt als quer bzw. winklig, insbesondere rechtwinklig zur Hauptdüse liegende Bohrung durch den Dichtnippel ausgebildet. Die Hauptdüse wird dabei als Öffnung definiert, welche vom Ventilsitz umgeben wird.

Bevorzugt ist die Vorsteuerbohrung mittig bezüglich der Hauptdüse und/oder bezüglich des Dichtnippels angeordnet. Dadurch wird eine einfache und möglichst symmetrische Form erreicht, welche Asymmetrien vermeidet und einfach herzustellen ist.

Der Dichtnippel ist bevorzugt als Scheibe ausgeführt. Dies hat sich als einfache und praktikable Ausführung bewährt.

Der Dichtnippel ist bevorzugt in der Nippelführung fixiert. Dadurch kann in besonders vorteilhafter Weise sichergestellt werden, dass der Dichtnippel nicht relativ zur Nippelführung bewegt wird und somit möglichst exakt in immer wieder gleicher Weise mit dem Ventilsitz in Kontakt kommt.

Bevorzugt sind in der Nippelführung eine Anzahl von Öffnungen ausgebildet, welche in der Offnungsstellung eine fluidische Verbindung zwischen Einlass und Hauptdüse oder zwischen Auslass und Hauptdüse bilden. Durch diese Öffnungen kann insbesondere sichergestellt werden, dass bei geöffnetem Ventil ein großer Durchlass für ein zu steuerndes Fluid zur Verfügung steht, so dass große Massenströme möglich sind.

Erfindungsgemäß ist die Hauptdüse in einem Rohr ausgebildet, welches an einem Längsende den Ventilsitz ausbildet und auf dessen Außenfläche die Nippelführung linear bewegbar angeordnet ist. Das Rohr kann somit zum einen Ventilsitz und Hauptdüse ausbilden bzw. definieren und gleichzeitig eine lineare Führung für die Nippelführung bereitstellen. Beispielsweise kann die Nippelführung hierzu unmittelbar umgebend um das Rohr angeordnet sein.

Dadurch kann eine besonders exakte Führung des Dichtnippels relativ zum Ventilsitz erreicht werden.

Die Nippelführung kann insbesondere auf der Außenfläche des Rohrs spielfrei oder spielarm angeordnet sein. Dadurch kann die Nippelführung besonders exakt relativ zum den Ventilsitz definierenden Rohr geführt werden.

Bevorzugt ist zwischen Nippelführung und Anker ein radiales Spiel vorgesehen. Dadurch kann die Fertigung vereinfacht werden bzw. es können Fertigungstoleranzen ausgeglichen werden. Da der Dichtnippel von der Nippelführung in vorteilhafter Weise relativ zum Ventilsitz geführt wird, stellt ein radiales Spiel zwischen Nippelführung und Anker keine Beeinträchtigung der Funktionalität bzw. der Dichtigkeit dar.

Bevorzugt weist der Anker eine Dichtkante auf, welche in der Ruheposition die Vorsteuerbohrung verschließt. Eine solche Dichtkante kann beispielsweise so ausgebildet sein, dass sie die Vorsteuerbohrung in der Ruheposition vollständig umgibt und somit einen Fluidaustausch verhindert.

Das Mitnahmeelement ist bevorzugt als vorstehender Ankerrand ausgebildet und die Nippelführung weist bevorzugt einen vorstehenden Nippelführungsrand auf, wobei der Ankerrand und der Nippelführungsrand sich umgreifen. Dadurch wird eine einfache und vorteilhafte Mitnahme der Nippelführung durch den Anker bei einer Bewegung, welche von der Zwischenposition des Ankers aus noch weiter weg von dem Ventilsitz führt, ermöglicht. Außerdem wird eine einfache Herstellung ermöglicht, da die beiden Ränder lediglich gegeneinander verklipst werden können.

Bevorzugt sind zwischen den Öffnungen und dem Nippelführungsrand eine Anzahl von Durchbrechungen in der Nippelführung ausgebildet, welche in der Schließstellung eine fluidische Verbindung zwischen Einlass und Vorsteuerbohrung oder zwischen Auslass und Vorsteuerbohrung bilden. Damit kann die bereits erwähnte Vorsteuerfunktion vorteilhaft realisiert werden, da ein expliziter Durchlass für das zu steuernde Fluid vorgesehen ist, auch wenn noch keine Bewegung der Nippelführung aus der Schließstellung heraus erfolgt ist. Wenn sich der Anker wie bereits erwähnt in seiner Ruheposition befindet dichtet er jedoch die Vorsteuerbohrung ab, so dass kein Fluidstrom durch die Vorsteuerbohrung möglich ist.

Die Vorspanneinrichtung ist bevorzugt als Druckfeder ausgebildet, welche zwischen Anker und Ventilkörper oder einer anderen mit dem Ventilkörper fest verbundenen Komponente des Ventils angeordnet ist. Dadurch kann in einfacher Weise eine drückende Kraft auf den Anker ausgeübt werden. Auch andere Ausführungen einer Vorspanneinrichtung sind jedoch möglich.

Bevorzugt ist in dem Ventilkörper ein Polrohr angeordnet, in welchem der Anker linear geführt wird. Dies ermöglicht eine vorteilhafte und exakte lineare Führung des Ankers.

Bevorzugt sind zwischen Anker und Polrohr eine Anzahl von Gleitringen angeordnet. Diese können die Bewegung des Ankers im Polrohr verbessern und den Anker fixieren.

Gemäß einer bevorzugten Ausführung sind die Öffnungen der Nippelführung von einem Filter überdeckt. Damit kann ein Eindringen von Schmutz verhindert werden.

Der Filter kann insbesondere als Gitternetz ausgebildet sein. Dies entspricht einer einfachen, dauerhaften und wirkungsvollen Ausführung.

Gemäß einer Ausführung ist der Filter als Armierung in die Nippelführung eingebettet. Dies ermöglicht eine interne Verstärkung der Nippelführung, insbesondere wenn der Filter als Gitternetz ausgebildet ist.

Gemäß einer Ausführung ist der Filter außenseitig auf der Nippelführung aufgebracht. Dies ermöglicht ein einfaches Aufbringen und auch eine Verstärkung der Nippelführung.

Der Filter kann dabei insbesondere in der ganzen Nippelführung oder auf der ganzen Nippelführung vorhanden sein, also auch außerhalb der Öffnungen. Damit kann die bereits erwähnte Stabilisierungswirkung erreicht werden.

Bevorzugt ist die Hauptdüse kreisförmig ausgebildet. Dies ermöglicht eine einfache Ausführung.

In der Zeichnung ist die Erfindung insbesondere in einem Ausführungsbeispiel schematisch dargestellt. Es zeigen:
- Fig. 1: ein Ventil gemäß einem Ausführungsbeispiel der Erfindung,
- Fig. 2a bis 2c: Ausschnitte des Ventils von Fig. 1 in unterschiedlichen Zuständen,
- Fig. 3: einen Querschnitt durch eine Nippelführung gemäß einer ersten Ausführung,
- Fig. 4: einen Querschnitt durch eine Nippelführung gemäß einer zweiten Ausführung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

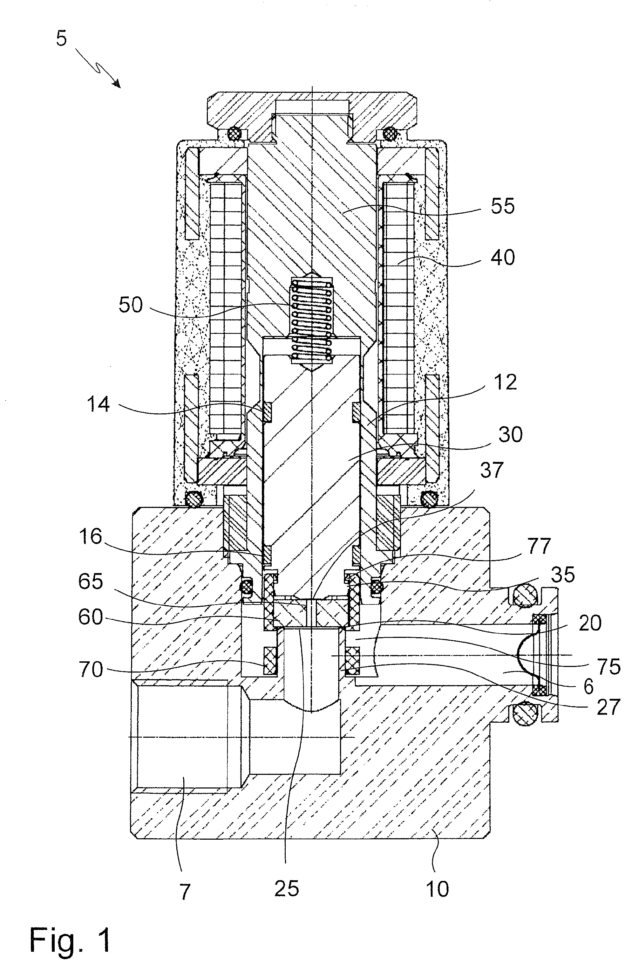

Fig. 1 zeigt ein elektromagnetisch betätigtes Ventil 5 gemäß einem Ausführungsbeispiel der Erfindung.

Das Ventil 5 weist einen Ventilkörper 10 auf. In dem Ventilkörper 10 sind ein Einlass 6 und ein Auslass 7 ausgebildet. Durch den Einlass 6 kann ein zu steuerndes Fluid, beispielsweise Wasserstoff, einströmen. Bei geöffnetem Ventil 5 soll dieses Fluid durch den Auslass 7 wieder austreten, wobei es bei geschlossenem Ventil nicht durch den Auslass 7 austreten soll.

Innerhalb des Ventilkörpers 10 ist ein Ventilsitz 20 ausgebildet. Dieser umschließt eine Hauptdüse 25. Ventilsitz 20 und Hauptdüse 25 sind durch ein Rohr 27 definiert, welches als entsprechend rohrförmiger Abschnitt innerhalb des Ventilkörpers 10 ausgebildet ist.

Oberhalb des Ventilsitzes 20 ist ein Anker 30 angeordnet. Dieser ist von einem Polrohr 12 umgeben, welches den Anker 30 linear führt, so dass er ausschließlich entlang einer Raumrichtung bewegbar ist**.** Zwischen Polrohr 12 und Anker 30 sind dabei zwei Gleitringe 14, 16 angeordnet, welche vorliegend aus Silikon ausgebildet sind, jedoch auch aus anderen Materialien bestehen können.

Das Ventil 5 weist eine Spule 40 auf, welche den Anker 30 zumindest teilweise umgibt und dazu ausgebildet ist, ein Magnetfeld zu erzeugen, mittels welchem der Anker 30 entlang seiner Raumrichtung bewegbar ist. Oberhalb des Ankers 30 ist ferner eine Vorspanneinrichtung 50 in Form einer Druckfeder angeordnet, welche den Anker 30 nach unten drückt. Die Vorspanneinrichtung 50 stützt sich dabei an einem Magnetkern 55 ab, welcher fest mit dem Ventilkörper 10 verbunden ist.

Zwischen Ventilsitz 20 und Anker 30 ist ein Dichtnippel 60 angeordnet. Mittig in dem Dichtnippel 60 ist eine Vorsteuerbohrung 65 angeordnet, welche vertikal durch den Dichtnippel 60 hindurchgeht.

Der Dichtnippel 60 ist in einer Nippelführung 70 fest aufgenommen. Die Nippelführung 70 liegt dabei außenseitig an dem Rohr 27 an und wird von dem Rohr 27 entlang der bereits mit Bezug auf den Anker 30 erwähnten Raumrichtung geführt, d.h. die Nippelführung 70 kann sich nur linear entlang dieser Raumrichtung bewegen. Hierzu sitzt die Nippelführung 70 spielfrei auf dem Rohr 27 auf.

Durch die eben beschriebene Ausführung wird sichergestellt, dass auch der Dichtnippel 60 sich mit Bezug auf den Ventilsitz 20 lediglich linear entlang der Raumrichtung bewegen kann.

Dadurch wird insbesondere auch sichergestellt, dass der Dichtnippel 60 immer wieder an der gleichen Stelle mit dem Ventilsitz 20 in Eingriff kommt.

In Fig. 1 ist der Anker 30 in seiner Ruheposition dargestellt und die Nippelführung 70 nimmt eine Schließstellung ein. Der Anker 30 weist eine Dichtkante 37 auf, welche die Vorsteuerbohrung 65 umgibt und somit verschließt. Ohne das Anliegen dieser Dichtkante 37 wäre in dem dargestellten Zustand ein Fluidfluss zwischen Einlass 6 und Auslass 7 nur durch die Vorsteuerbohrung 65 möglich. Aufgrund des Anliegens der Dichtkante 37 ist auch dieser Fluidfluss nicht mehr möglich, so dass das Ventil 5 in dem dargestellten Zustand vollständig verschlossen ist.

Der Anker 30 weist ein Mitnahmeelement 35 auf, welches als vorstehender Ankerrand ausgebildet ist. Komplementär hierzu weist die Nippelführung 70 einen umlaufenden Nippelführungsrand 77 auf.

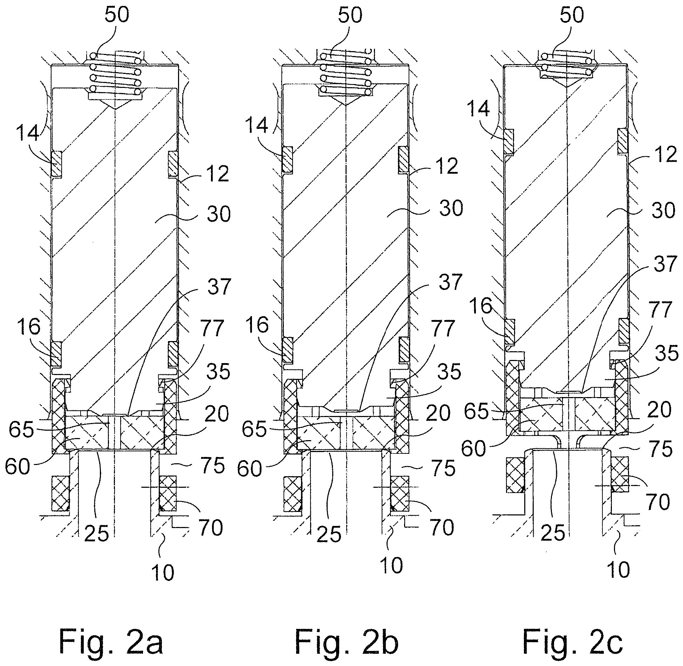

Seitlich in der Nippelführung 70 sind Öffnungen 75 ausgebildet, welche in dem in Fig. 1 dargestellten Zustand neben dem Rohr 27 liegen und deshalb keine Funktion haben. Auf ihre Bedeutung wird weiter unten mit Bezug auf Fig. 2c näher eingegangen werden.

Die Funktionalität des Ventils 5 wird nunmehr mit Bezug auf die Fig. 2a bis 2c beschrieben. Diese zeigen jeweils einen Ausschnitt aus dem in Fig. 1 dargestellten Ventil 5.

In dem Zustand von Fig. 2a, welcher demjenigen von Fig. 1 entspricht liegt wie bereits erwähnt die Dichtkante 37 des Ankers 30 an dem Dichtnippel 60 derart an, dass auch die Vorsteuerbohrung 65 verschlossen wird. Da gleichzeitig der Dichtnippel 60 den Ventilsitz 20 bzw. die Hauptdüse 25 verschließt, ist das Ventil 5 geschlossen und es kann kein Fluidstrom zwischen Einlass 6 und Auslass 7 stattfinden.

Wie gezeigt, sind das Mitnahmeelement 35 und der Nippelführungsrand 77 vertikal voneinander beabstandet. Zwischen Anker 30 und Nippelführung 70 kann dabei auch ein radiales Spiel vorgesehen sein, welches die Fertigung vereinfacht und den Betrieb des Ventils 5 nicht stört.

Fig. 2b zeigt einen Zustand, in welchem der Anker 30 aufgrund eines anliegenden Magnetfelds etwas nach oben bewegt wurde, und zwar bis zu einer Zwischenposition des Ankers 30. Dabei liegen die beiden vorstehenden Ränder 35, 77 aneinander an, ohne dass sich jedoch die Nippelführung 70 bereits bewegt hätte. Aufgrund des nach oben verschobenen Ankers 30 wird die Vorsteuerbohrung 65 geöffnet, da sich die Dichtkante 37 von dem Dichtnippel 60 entfernt hat. Dies ermöglicht einen Druckausgleich zwischen Einlass 6 und Auslass 7, wodurch ein nachfolgendes Entfernen des Dichtnippels 60 von dem Ventilsitz 20 deutlich erleichtert wird.

In Fig. 2c wurde der Anker 30 noch weiter als bei der in Fig. 2b dargestellten Zwischenposition von dem Ventilsitz 20 weg bewegt und befindet sich nunmehr in einer oberen Endposition. Dabei wurde aufgrund des Eingriffs zwischen den beiden vorstehenden Rändern 35, 77 die Nippelführung 70 mit nach oben gezogen. Dadurch wurde der Dichtnippel 60 von dem Ventilsitz 20 entfernt. Gleichzeitig befinden sich nunmehr auch die seitlich in der Nippelführung 70 befindlichen Öffnungen 75 in einer Position, dass sie eine fluidische Verbindung vom Einlass 6 zur Hauptdüse 25 ermöglichen. Dadurch wird der Strömungsquerschnitt deutlich erhöht, was einen vorteilhaften großvolumigen Fluidaustausch ermöglicht.

Wird von dem in Fig. 2c dargestellten Zustand aus beispielsweise ein in der Spule 40 fließender Strom abgeschaltet, so drückt die Vorspanneinrichtung 50 den Anker 30 wieder nach unten, welcher somit auch wieder mit dem Dichtnippel 60 in Eingriff kommt und diesen mit nach unten drückt. Somit wird das Ventil 5 wieder verschlossen und es wird wieder der in Fig. 2a dargestellte Zustand eingenommen.

Insgesamt hat es sich gezeigt, dass die dargestellte Ausführung eines Ventils 5 gerade bei der Verwendung zum Steuern von kalten Fluiden einen erheblichen Vorteil im Vergleich zu Ausführungen gemäß dem Stand der Technik bietet, da der Dichtnippel 60 relativ zum Ventilsitz 20 exakt geführt wird und Undichtigkeiten aufgrund unterschiedlicher Kontaktstellen zwischen Dichtnippel 60 und Ventilsitz 20 auf diese Weise vermieden werden.

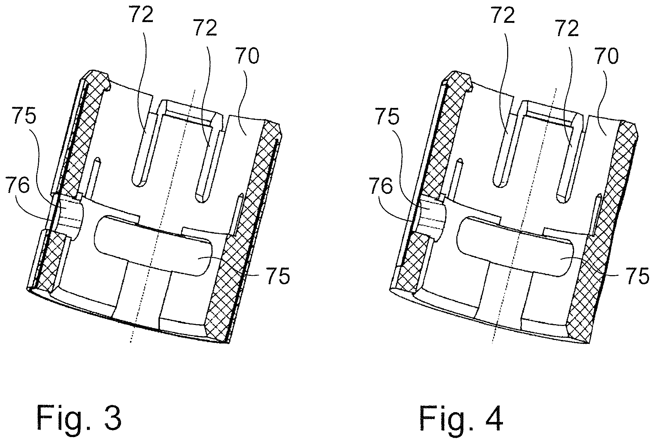

Fig. 3 zeigt eine Nippelführung 70 gemäß einer ersten möglichen Ausführung im Querschnitt. Fig. 4 zeigt eine Nippelführung 70 gemäß einer zweiten möglichen Ausführung im Querschnitt. Die Ausführungen der Fig. 3 und 4 können bei dem weiter oben in den Fig. 1 und 2a bis 2c gezeigten Ausführungsbeispiel eines Ventils 5 verwendet werden.

In beiden gezeigten Ausführungen sind obenseitig Durchbrechungen 72 ausgebildet. Diese ermöglichen einen Fluidstrom von dem Einlass 6 zur Vorsteuerbohrung 65 auch dann, wenn sich die Nippelführung 70 in der Schließstellung befindet. Dies ermöglicht eine besonders vorteilhafte Implementierung der oben bereits erwähnten Vorsteuerfunktion, da durch die Durchbrechungen 72 explizit ein Durchlass für das Fluid vorgesehen ist. Solange die Dichtkante 37 des Ankers 30 an dem Dichtnippel 60 anliegt kann jedoch typischerweise trotzdem kein Fluid durch die Vorsteuerbohrung 65 strömen.

In beiden gezeigten Ausführungen ist außerdem ein Filter 76 vorhanden. Dieser ist als Gitternetz ausgeführt, überdeckt die Öffnungen 75 und sorgt somit für ein Zurückhalten von Verunreinigungen. Er ist jedoch auch außerhalb dieser Öffnungen 75 vorhanden.

Bei der Ausführung von Fig. 3 ist der Filter 76 in die Nippelführung 70 eingelassen. Er dient somit auch als Armierung. Bei der Ausführung von Fig. 4 ist der Filter 76 außenseitig auf die Nippelführung 70 aufgebracht. In beiden Fällen kann der Filter 76 eine gewisse Stabilisierungswirkung erfüllen.

## Patentansprüche

1. Elektromagnetisch betätigtes Ventil, aufweisend
▪ einen Ventilkörper (10), in welchem ein Einlass (6) und ein Auslass (7) ausgebildet sind,
▪ einen Ventilsitz (20), welcher eine Hauptdüse (25) umschließt und in dem Ventilkörper (10) strömungsmäßig zwischen dem Einlass (6) und dem Auslass (7) angeordnet ist,
▪ einen Anker (30), welcher in dem Ventilkörper (10) zur Bewegung lediglich linear entlang einer Raumrichtung angeordnet ist,
▪ eine Spule (40), welche bei durchfließendem Strom ein Magnetfeld zur Bewegung des Ankers (30) entlang der Raumrichtung erzeugt,
▪ eine Vorspanneinrichtung (50),
▪ einen Dichtnippel (60), in welchem eine Vorsteuerbohrung (65) angeordnet ist,
▪ eine Nippelführung (70), in welcher der Dichtnippel (60) aufgenommen ist und welche in dem Ventilkörper (10) zur Bewegung lediglich linear entlang der Raumrichtung zwischen einer Schließstellung und einer Öffnungsstellung angeordnet ist, wobei Nippelführung (70) und Anker (30) relativ zueinander begrenzt beweglich sind,
▪ wobei in der Schließstellung der Dichtnippel (60) die Hauptdüse (25) derart verschließt, dass nur die Vorsteuerbohrung (65) Einlass (6) und Auslass (7) verbindet, und in der Öffnungsstellung der Dichtnippel (60) vom Ventilsitz (20) beabstandet ist,
▪ wobei die Vorspanneinrichtung (50) eine Kraft auf den Anker (30) ausübt, welche ihn in eine Ruheposition vorspannt, in welcher der Anker (30) die Kraft auf den Dichtnippel (60) überträgt, wobei die Kraft den Dichtnippel (60) in die Schließstellung drückt und der Anker (30) die Vorsteuerbohrung (65) verschließt,
▪ wobei der Anker (30) ein Mitnahmeelement (35) aufweist, welches bei Bewegung des Ankers (30) aus der Ruheposition in eine Zwischenposition nach Öffnung der Vorsteuerbohrung (65) mit der Nippelführung (70) in Eingriff kommt, und
▪ wobei bei weiterer Bewegung des Ankers (30) aus der Zwischenposition das Mitnahmeelement (35) die Nippelführung (70) aus der Schließstellung in die Öffnungsstellung zieht, **dadurch gekennzeichnet, dass**
▪ die Hauptdüse (25) in einem Rohr (27) ausgebildet ist, welches an einem Längsende den Ventilsitz (20) ausbildet und auf dessen Außenfläche die Nippelführung (70) linear bewegbar angeordnet ist.

2. Ventil nach Anspruch 1, **dadurch gekennzeichnet, dass** die Vorsteuerbohrung (65) als winklig, insbesondere rechtwinklig zur Hauptdüse (25) liegende Bohrung durch den Dichtnippel (60) ausgebildet ist, und/oder die Vorsteuerbohrung (65) mittig bezüglich der Hauptdüse (25) und/oder bezüglich des Dichtnippels (60) angeordnet ist.

3. Ventil nach einem der vorhergehenden Ansprüche, **dadurch gekennzeichnet, dass** der Dichtnippel (60) in der Nippelführung (70) fixiert ist.

4. Ventil nach einem der vorhergehenden Ansprüche, **dadurch gekennzeichnet, dass** in der Nippelführung (70) eine Anzahl von Öffnungen (75) ausgebildet sind, welche in der Öffnungsstellung eine fluidische Verbindung zwischen Einlass (6) und Hauptdüse (25) oder zwischen Auslass (7) und Hauptdüse (25) bilden.

5. Ventil nach einem der vorhergehenden Ansprüche, **dadurch gekennzeichnet, dass** die Nippelführung (70) auf der Außenfläche des Rohrs (27) radial spielfrei oder spielarm angeordnet ist.

6. Ventil nach einem der vorhergehenden Ansprüche, **dadurch gekennzeichnet, dass** der Anker (30) eine Dichtkante (37) aufweist, welche in der Ruheposition die Vorsteuerbohrung (65) verschließt.

7. Ventil nach einem der vorhergehenden Ansprüche, **dadurch gekennzeichnet, dass** das Mitnahmeelement (35) als vorstehender Ankerrand ausgebildet ist und die Nippelführung (70) einen vorstehenden Nippelführungsrand (77) aufweist, wobei der Ankerrand und der Nippelführungsrand (77) sich umgreifen.

8. Ventil nach Anspruch 4, **dadurch gekennzeichnet, dass** die Öffnungen (75) der Nippelführung (70) von einem Filter (76) überdeckt sind.

9. Ventil nach Anspruch 8, **dadurch gekennzeichnet, dass** der Filter (76) als Armierung in die Nippelführung (70) eingebettet ist oder der Filter (76) außenseitig auf der Nippelführung (70) aufgebracht ist.

## Claims

1. Electromagnetically actuated valve, having
• a valve body (10) in which an inlet (6) and an outlet (7) are formed,
• a valve seat (20) which surrounds a main nozzle (25) and which is arranged in the valve body (10) between the inlet (6) and the outlet (7) in terms of flow,
• an armature (30) which is arranged in the valve body (10) for movement merely in a linear manner along a spatial direction,
• a coil (40) which, when current flows through, generates a magnetic field for movement of the armature (30) along the spatial direction,
• a preloading device (50),
• a sealing nipple (60) in which a pilot-control bore (65) is arranged,
• a nipple guide (70) in which the sealing nipple (60) is accommodated and which is arranged in the valve body (10) for movement merely in a linear manner along the spatial direction between a closed position and an open position, wherein nipple guide (70) and armature (30) are movable relative to one another to a limited extent,
• wherein, in the closed position, the sealing nipple (60) closes off the main nozzle (25) in such a way that only the pilot-control bore (65) connects inlet (6) and outlet (7) and, in the open position, the sealing nipple (60) is spaced apart from the valve seat (20),
• wherein the preloading device (50) exerts a force on the armature (30) that preloads the latter into a rest position, in which rest position the armature (30) transmits the force to the sealing nipple (60), wherein the force pushes the sealing nipple (60) into the closed position and the armature (30) closes off the pilot-control bore (65),
• wherein the armature (30) has a driving element (35) which, with movement of the armature (30) from the rest position into an intermediate position, comes into engagement with the nipple guide (70) after opening of the pilot-control bore (65), and
• wherein, with further movement of the armature (30) from the intermediate position, the driving element (35) pulls the nipple guide (70) from the closed position into the open position, **characterized in that**
• the main nozzle (25) is formed in a tube (27) which forms the valve seat (20) at a longitudinal end and on whose outer surface the nipple guide (70) is arranged in a linearly movable manner.

2. Valve accord to Claim 1, **characterized in that** the pilot-control bore (65) is formed as a bore through the sealing nipple (60) that is at an angle, in particular at a right angle, to the main nozzle (25), and/or the pilot-control bore (65) is arranged centrally in relation to the main nozzle (25) and/or in relation to the sealing nipple (60).

3. Valve accord to either of the preceding claims, **characterized in that** the sealing nipple (60) is fixed in the nipple guide (70).

4. Valve accord to one of the preceding claims, **characterized in that** a number of openings (75) are formed in the nipple guide (70), which openings, in the open position, form a fluidic connection between inlet (6) and main nozzle (25) or between outlet (7) and main nozzle (25).

5. Valve accord to one of the preceding claims, **characterized in that** the nipple guide (70) is arranged free of radial play, or with little radial play, on the outer surface of the tube (27).

6. Valve accord to one of the preceding claims, **characterized in that** the armature (30) has a sealing edge (37) which closes off the pilot-control bore (65) in the rest position.

7. Valve accord to one of the preceding claims, **characterized in that** the driving element (35) is formed as a projecting armature rim, and the nipple guide (70) has a projecting nipple-guide rim (77), wherein the armature rim and the nipple-guide rim (77) engage around one another.

8. Valve according to Claim 4, **characterized in that** the openings (75) of the nipple guide (70) are covered by a filter (76).

9. Valve according to Claim 8, **characterized in that** the filter (76) is embedded as reinforcement into the nipple guide (70), or the filter (76) is applied on the outside of the nipple guide (70).

## Revendications

1. Soupape à commande électromagnétique, présentant
- un corps de soupape (10), dans lequel sont réalisées une entrée (6) et une sortie (7),
- un siège de soupape (20), qui entoure une buse principale (25) et qui est agencé dans le corps de soupape (10) selon l'écoulement entre l'entrée (6) et la sortie (7),
- un induit (30), qui est agencé dans le corps de soupape (10) pour se déplacer uniquement linéairement le long d'une direction spatiale,
- une bobine (40) qui, lors du passage d'un courant, génère un champ magnétique pour déplacer l'induit (30) le long de la direction spatiale,
- un dispositif de précontrainte (50),
- un manchon d'étanchéité (60), dans lequel est agencé un alésage pilote (65),
- un guide de manchon (70), dans lequel est reçu le manchon d'étanchéité (60) et qui est agencé dans le corps de soupape (10) pour se déplacer uniquement linéairement le long de la direction spatiale entre une position de fermeture et une position d'ouverture, le guide de manchon (70) et l'induit (30) étant mobiles de manière limitée l'un par rapport à l'autre,
- dans la position de fermeture, le manchon d'étanchéité (60) fermant la buse principale (25) de telle sorte que seul l'alésage pilote (65) relie l'entrée (6) et la sortie (7), et dans la position d'ouverture, le manchon d'étanchéité (60) étant espacé du siège de soupape (20),
- le dispositif de précontrainte (50) exerçant une force sur l'induit (30) qui le précontraint vers une position de repos dans laquelle l'induit (30) transmet la force au manchon d'étanchéité (60), la force poussant le manchon d'étanchéité (60) vers la position de fermeture et l'induit (30) fermant l'alésage pilote (65),
- l'induit (30) présentant un élément d'entraînement (35) qui, lors d'un déplacement de l'induit (30) de la position de repos vers une position intermédiaire après l'ouverture de l'alésage pilote (65), vient en prise avec le guide de manchon (70), et
- lors d'un déplacement supplémentaire de l'induit (30) depuis la position intermédiaire, l'élément d'entraînement (35) tirant le guide de manchon (70) de la position de fermeture vers la position d'ouverture, **caractérisé en ce que**
- la buse principale (25) est réalisée dans un tube (27) qui réalise le siège de soupape (20) à une extrémité longitudinale et sur la surface extérieure duquel le guide de manchon (70) est agencé de manière à pouvoir se déplacer linéairement.

2. Soupape selon la revendication 1, **caractérisée en ce que** l'alésage pilote (65) est réalisé sous forme d'alésage situé en angle, notamment à angle droit par rapport à la buse principale (25), à travers le manchon d'étanchéité (60), et/ou l'alésage pilote (65) est agencé au centre par rapport à la buse principale (25) et/ou par rapport au manchon d'étanchéité (60).

3. Soupape selon l'une quelconque des revendications précédentes, **caractérisée en ce que** le manchon d'étanchéité (60) est fixé dans le guide de manchon (70).

4. Soupape selon l'une quelconque des revendications précédentes, **caractérisée en ce qu'**un certain nombre d'ouvertures (75) sont réalisées dans le guide de manchon (70), lesquelles forment, dans la position d'ouverture, une liaison fluidique entre l'entrée (6) et la buse principale (25) ou entre la sortie (7) et la buse principale (25).

5. Soupape selon l'une quelconque des revendications précédentes, **caractérisée en ce que** le guide de manchon (70) est agencé radialement sans jeu ou avec un faible jeu sur la surface extérieure du tube (27).

6. Soupape selon l'une quelconque des revendications précédentes, **caractérisée en ce que** l'induit (30) présente une arête d'étanchéité (37) qui, dans la position de repos, ferme l'alésage pilote (65).

7. Soupape selon l'une quelconque des revendications précédentes, **caractérisée en ce que** l'élément d'entraînement (35) est réalisé sous forme de bord d'induit en saillie et le guide de manchon (70) présente un bord de guide de manchon en saillie (77), le bord d'induit et le bord de guide de manchon (77) s'entourant l'un l'autre.

8. Soupape selon la revendication 4, **caractérisée en ce que** les ouvertures (75) du guide de manchon (70) sont recouvertes d'un filtre (76).

9. Soupape selon la revendication 8, **caractérisée en ce que** le filtre (76) est incorporé sous forme d'armature dans le guide de manchon (70) ou le filtre (76) est appliqué sur le côté extérieur du guide de manchon (70).
